# EUROPÄISCHE PATENTSCHRIFT

(11) **EP 0 683 126 B1**
(45) Veröffentlichungstag und Bekanntmachung des Hinweises auf die Patenterteilung: **17.03.1999**
(21) Anmeldenummer: 95106680.2
(22) Anmeldetag: 04.05.1995
(51) Int. Cl.: B65H 31/30

(54) **Verfahren und Vorrichtung zur automatischen Bereitstellung eines Bogenstapels für eine Druckmaschine**
Method and apparatus for automatically delivering a pile of sheets to a printing machine
Procédé et appareil d'approvisionnement d'une pile de feuille à une machine à imprimer

(30) Priorität: 20.05.1994 DE 4417806
(43) Veröffentlichungstag der Anmeldung: 22.11.1995
(73) Patentinhaber: MAN Roland Druckmaschinen AG, 63075 Offenbach (DE)
(72) Erfinder: Kraus, Hans-Peter, D-73072 Donzdorf (DE); Benz, Martin, D-89558 Treffelhausen (DE); Falkenstein, Hermann-Josef, D-73033 Göppingen (DE)
(74) Vertreter: Marek, Joachim, Dipl.-Ing.

(56) Entgegenhaltungen:
- EP-A- 0 097 308
- EP-A- 0 377 398

## Beschreibung

Die Erfindung betrifft eine Vorrichtung nach dem Oberbegriff des Patentanspruchs 1.

Zur Vorbereitung einer Druckmaschine auf den Druckbetrieb ist Bedruckstoff bereitzustellen. Sowohl für Bogen- als auch für Rollendruckmaschinen sind dazu Logistiksysteme vielfältiger Art entwickelt worden. Damit eine Bogendruckmaschine reibungslos und ohne Unterbrechungen betrieben werden kann, ist es zum Beispiel auch bekannt, deren Anleger mit Non-Stop-Einrichtungen auszurüsten. Diese beinhalten Transporteinrichtungen für die Handhabung von neuen Bogenstapeln und die Entnahme leerer Paletten. Hierbei tritt häufig das Problem auf, daß eine für den Transport bei der Anlieferung des Papiers verwendete Transportpalette für die Handhabung in der Non-Stop-Einrichtung am Anleger nicht geeignet ist. Daher werden, um die Genauigkeit der Stapelführung und die Betriebssicherheit der Einrichtung zu gewährleisten, spezielle Systempaletten verwendet. Auf diese mußte bisher der Bogenstapel manuell umgesetzt werden. Das konnte dadurch geschehen, daß mit Hilfe eines sogenannten Stapelwenders der Stapel um 180 Grad gedreht, also auf den Kopf gestellt wurde und die dann oben liegende Transportpalette abgehoben wurde. Bei bis zu 1,60 m hohen Stapeln und bis zu 30 kg schweren Paletten bedeutete das Schwerarbeit. Außerdem mußten die Leerpaletten noch an einen Stellplatz transportiert werden.

Vorrichtungen dieser Art sind aus der Praxis bekannt.

Ziel der Erfindung ist es die Vorbereitung des Bogenstapels für die Verarbeitung in einer bogenverarbeitenden Maschine zu vereinfachen.

Als Aufgabe stellt sich daher, ein Verfahren und eine Vorrichtung zur Vorbereitung eines Bogenstapels auf die Verarbeitung in einer bogenverarbeitenden Maschine zu schaffen, die manuelle Tätigkeiten ersetzt und einen automatischen Palettenaustausch zur Vorbereitung eines Bogenstapels für die automatisierte Zufuhr zu bogenverarbeitenden Maschinen ermöglicht.

Die Aufgabe wird mit einem Verfahren nach dem Patentanspruch 1 und einer Vorrichtung nach den Patentansprüchen 4 und 5 gelöst. Vorteilhaft ist dabei, daß die Transportpalette auf kürzestem Weg wieder aus dem bogenverarbeitenden Betrieb herausgeschleust wird, wobei sie manuell nicht gehandhabt werden muß. Vorteilhaft ist weiterhin die Verbindung zwischen der automatischen Umstapelung und der Manipulation des Bogenstapels zum lockern, lüften und ausrichten. Zu weiteren Ausgestaltungen geben die Unteransprüche nähere Auskunft.

Die Erfindung wird im Folgenden anhand von Ausführungsbeispielen näher erläutert.

Die Zeichnungen zeigen in
- Figur 1: eine Übersicht über die Vorrichtung,
- Figur 2: ein Handhabungsgerät,
- Figuren 3 bis 12: schematische Darstellungen zur Erläuterung des Verfahrensablaufes nach einer ersten Variante der Vorrichtung,
- Figuren 13 bis 16: schematische Darstellungen zur Erläuterung des Verfahrensablaufes nach einer zweiten Variante der Vorrichtung
und
- Figuren 17 und 18: zwei Ansichten eines steuerbaren, mehrstufigen Palettenspeichers.

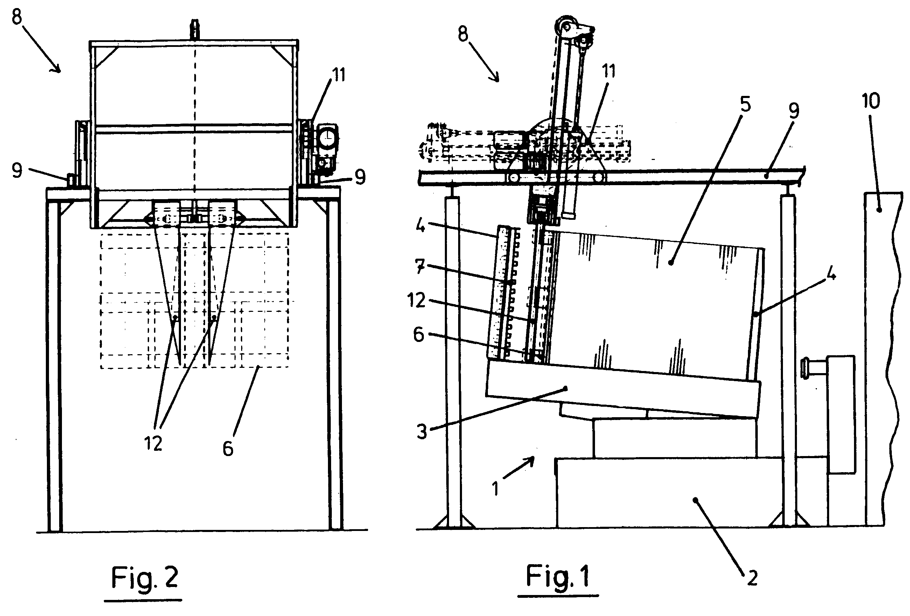

In den Figuren 1 und 2 ist eine erste Variante einer Vorrichtung zur Durchführung des beanspruchten Verfahrens dargestellt. Die Vorrichtung enthält einen bekannten Stapelwender 1. Dieser besteht aus einem gegebenenfalls verfahrbaren Sockel 2 und einem daran schwenkbar angeordneten Tragarm 3. Der Tragarm 3 ist mit zwei Anpressplatten 4 versehen, die senkrecht auf dem Tragarm 3 aufsitzen. Die Anpressplatten 4, die auch gabelförmig ausgebildet sein können, sind in Längsrichtung des Tragarms 3 relativ zueinander verschiebbar, um den Bogenstapel 5 dazwischen einklemmen zu können. Der Tragarm 3 ist sowohl um eine in der Verschiebeebene der Anpressplatten 4, symmetrisch zu deren Ausdehnung liegende Achse, als auch um eine senkrecht und symmetrisch auf dieser stehenden Achse schwenkbar. Damit können die Anpressplatten 4 sowohl aus einer horizontalen in eine vertikale Lage, als auch in der Vertikalen um die zweite, zwischen ihnen angeordnete Achse drehend geschwenkt werden. Die Anpressplatten 4 dienen dem Zusammenpressen eines bereitgestellten Bogenstapels 5 von dessen Ober- und Unterseite her, wobei der Bogenstapel 5 dann mittels des Tragarmes 3 aus der Vertikalen in die Horizontale geschwenkt und auch in seiner Orientierung auf den Kopf gestellt werden kann. Der Bogenstapel 5 kann dabei auch auf einer Transportpalette 6 sitzen. Für die automatische Verarbeitung des Bogenstapels 5 ist außerdem beispielsweise eine Systempalette 7 vorgesehen, die mit der unteren Anpressplatte 4 des Stapelwenders 1 lösbar verbunden ist. Beispielsweise kann die untere Anpressplatte 4 gabelförmig sein und in Ausnehmungen der Systempalette 7 eingreifen. Zur Vorbereitung der Verarbeitung kann der Bogenstapel 5 mit der Transportpalette 6 auf der Systempalette 7 abgesetzt werden.

Die Vorrichtung enthält weiterhin einen Paletten-Manipulator. Der Paletten-Manipulator beinhaltet ein Handhabungsgerät 8, eine Fahrschiene 9 für das Handhabungsgerät 8 und einen Palettenspeicher 10. Die Fahrschiene 9 ist parallel zur Längsachse des Stapelwenders 1 ausgerichtet und oberhalb von dessen Arbeitsraum angeordnet. Der Palettenspeicher 10 dient der Aufnahme von Transportpaletten 6. Die Fahrschiene 9 verbindet den Bereich des Stapelwenders 1 mit dem des Palettenspeichers 10.

Das Handhabungsgerät 8 enthält ein Fahrwerk 11, das auf der Fahrschiene 9 aufsitzt und die Bewegung des Handhabungsgerätes 8 über dem Stapelwender 1 und dem Palettenmagazin 10 ermöglich. Das Handhabungsgerät 8 ist schwenkbar an dem Fahrwerk 11 angebracht und mit einem Greifer 12 zur Aufnahme von Paletten versehen. Der Greifer 12 ist darüberhinaus an dem Handhabungsgerät 8 linear bewegbar. Dabei muß der Greifer 12 wenigstens einen Weg in der Länge der größeren Ausdehnung einer Transportpalette überbrücken können.

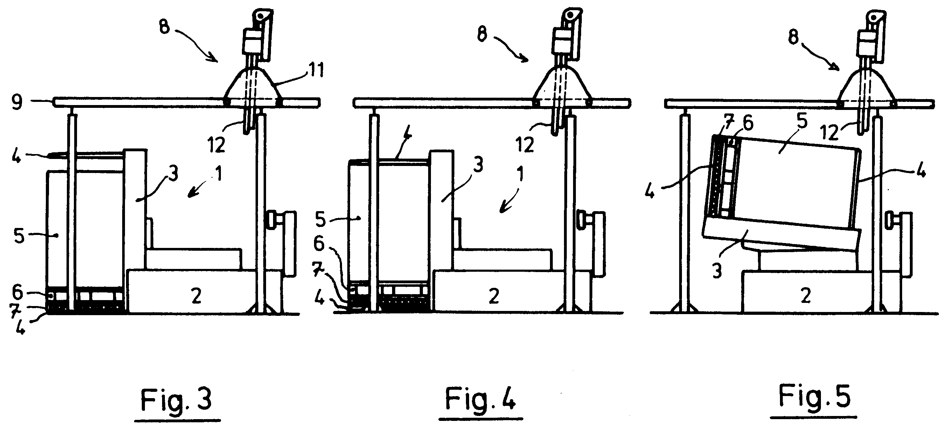

Zur Funktion der Vorrichtung bzw. Ablauf des Verfahrens: Für die Vorbereitung des Bogenstapels auf seine Verarbeitung in der Druckmaschine ist es notwendig ihn von der Transportpalette 6 auf die im Anleger einer Druckmaschine oder einer anderen bogenverarbeitenden Maschine verwendbaren Systempalette 7 umzusetzen. Dies geschieht dadurch, daß in dem erfindungsgemäßen Verfahren der Bogenstapel 5 zusammen mit der Transportpalette 6 geklemmt und gekippt wird, die Transportpalette 6 freigegeben, entnommen und abgelegt wird und der Bogenstapel 5 auf der Systempalette 7 abgesetzt wird.
Der Verfahrensablauf ist im Folgenden an Hand der Figuren 3 bis 12 Schritt für Schritt erläutert.
- Figur 3:: Der Bogenstapel 5 ist auf der Transportpalette 6 am Stapelwender 1 bereitgestellt.
- Figur 4:: Der Bogenstapel 5 wird gemeinsam mit der Transportpalette 6 zwischen den Anpressplatten 4 des Stapelwenders 1 festgeklemmt.
- Figur 5:: Der Bogenstapel 5 wird am Stapelwender 1 mittels des Tragarms 3 aus der Vertikalen in eine Lage über die Horizontale hinaus gekippt, wobei ein Winkel von etwa 95 Grad, d.h. 5 Grad über die Horizontale hinaus, als ausreichend angesehen wird.

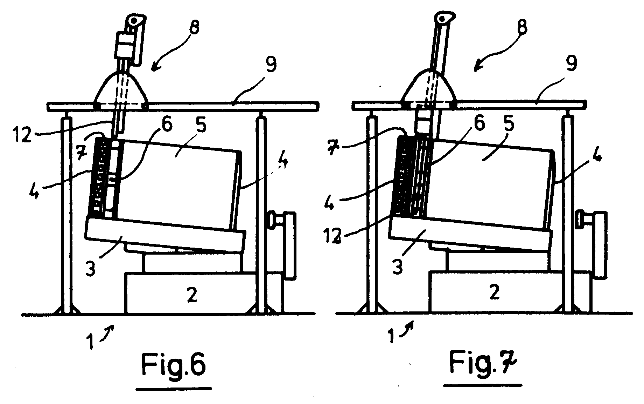

- Figur 6:: Das Handhabungsgerät 8 fährt auf der Fahrschiene 10 aus der Ruheposition in die Entnahmeposition über dem gekippten Bogenstapel 5.

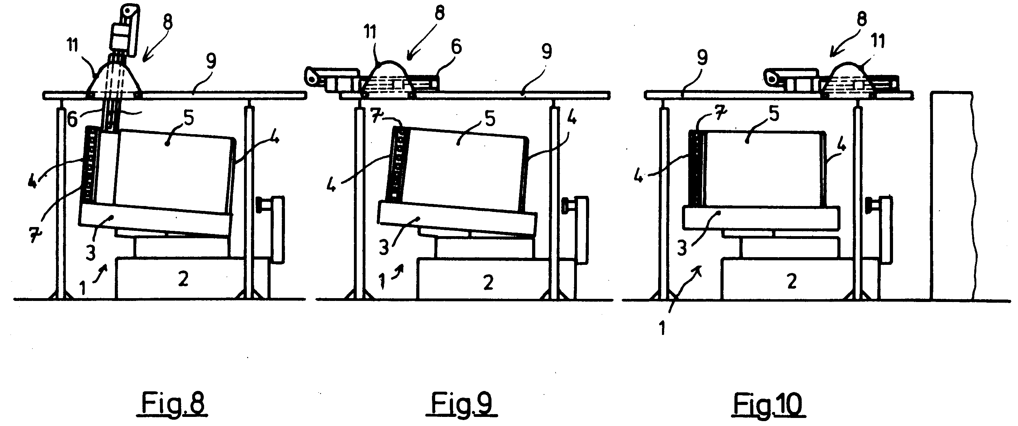

- Figur 7:: Der Greifer 12 des Handhabungsgerätes 8 greift die Transportpalette 6, während sie noch gemeinsam mit dem Bogenstapel 5 zwischen den Anpressplatten 4 eingespannt ist. Danach werden die Anpressplatten 4 auseinandergefahren, sodaß der Bogenstapel 5 und die Transportpalette 6 frei werden.
- Figur 8:: Das Handhabungsgerät 8 rückt die Transportpalette 6 von der Stapeloberfläche ab und fährt sie aus dem Stapel bereich. Die Papierbogen bleiben durch die leichte Schräglage des Tragarms 3 in ihrer Position.
- Figur 9:: Das Handhabungsgerät 8 schwenkt den Greifer 12 mit der festgeklammerten Transportpalette 6 in die Horizontale. Dabei kommt die Transportpalette 6 automatisch in die seitenrichtige Lage. Gleichzeitig werden die Anpressplatten 4 zum Klemmen des Bogenstapels 5 gemeinsam mit der Systempalette 7 gegeneinander bewegt.

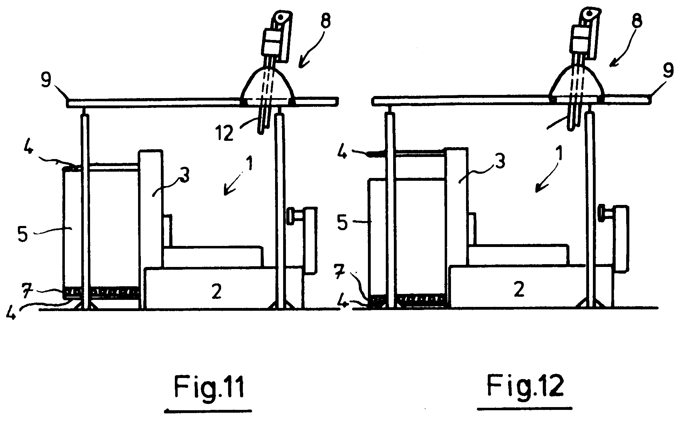

- Figur 10:: Das Handhabungsgerät 8 fährt mit der Transportpalette 6 zur Entladeposition am Palettenspeicher 10. Gleichzeitig wird der Tragarm 3 mit dem Bogenstapel 5 in die Horizontale geschwenkt. In dieser Position kann er gerüttelt, belüftet und ausgerichtet werden.
- Figur 11:: Der Bogenstapel 5 wird am Stapelwender 1 erneut eingeklemmt und in die Vertikale zurückgekippt. Das Handhabungsgerät 8 wird um 95 Grad nach oben geschwenkt und in die Ruheposition gefahren.
- Figur 12:: Der Bogenstapel 5 wird von dem Stapelwender 1 freigegeben und kann auf der Systempalette 7 zur automatischen Verarbeitung an eine bogenverarbeitende Maschine transportiert werden.

Die Vorrichtung bereitet demnach automatisch den Bogenstapel 5 auf die ebenfalls automatische Verarbeitung in einer Bogen verarbeitenden Maschine, z.B. einer Bogendruckmaschine, vor. Die als Euro-Paletten bezeichneten Transportpaletten 6 werden ohne manuellen Eingriff entfernt und für die Wiederverwendung in dem Palettenmagazin 10 bereitgestellt. Durch die Konfiguration des Systems werden die Transportpaletten 6 automatisch seitenrichtig, d.h. mit der Oberseite nach oben abgelegt. Die Verwendung einer Systempalette 7 ist abhängig von dem jeweils für die Bogenzufuhr an der Bogen verarbeitenden Maschine eingesetzten Logistiksystem. Die Verwendung des Stapelwenders 1 erlaubt in vorteilhafter Weise die Kombination der Funktionen Palettenaustausch mit den Funktionen Stapel Lockern, Belüften und Ausrichten. Damit ist eine optimale Vorbereitung für die Weiterverarbeitung möglich.

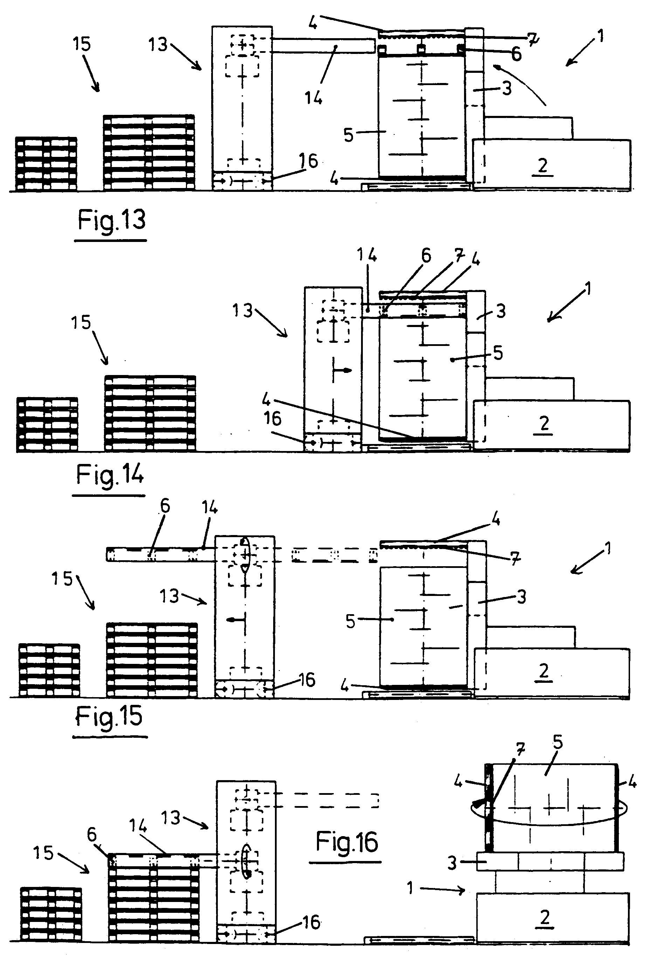

In Figuren 13 bis 16 ist der Funktionsablauf einer zweiten Version der Vorrichtung und der zugehörige Ablauf des Verfahrens beschrieben.
Die Vorrichtung enthält ebenfalls den Stapelwender 1 mit den zugehörigen Elementen. Dem Stapelwender 1 gegenüberliegend ist ein Handhabungsgerät 13 angeordnet, das in Richtung zum Stapelwender 1 verfahrbar ist. Es weist dazu ein Fahrwerk 16 auf, an dem ein Greifer 14 gehaltert ist, der der Entnahme der Transportpalette 6 dient. Der Greifer 14 ist einerseits in der Höhe verfahrbar und auch um seine Längsachse drehbar. Weiterhin ist der Greifer 14 um eine vertikale Achse am Fahrwerk 16 schwenkbar.
Alternativ kann das Handhabungsgerät 13 feststehend angeordnet sein. Dann ist der Greifer 14 an einem Ausleger angebracht und in Längsrichtung mindestens über den Weg der längsten Ausdehnung einer Transportpalette 6 verfahrbar.
Hinter dem Handhabungsgerät 13 ist ein Palettenspeicher 15 für entladene leere Transportpaletten 6 vorgesehen.
Der Verfahrensablauf für diese Vorrichtung ist im Folgenden an Hand der Figuren 13 bis 16 erläutert.
- Figur 13:: Der Bogenstapel 5 wird mit der Transportpalette 6 und der Systempalette 7 zwischen den Anpressplatten 4 des Stapelwenders 1 festgeklemmt und auf den Kopf gestellt, danach wird die oben liegende Anpressplatte 4 angehoben und die Transportpalette 6 freigegeben.
- Figur 14:: Das Handhabungsgerät 13 bzw. der Greifer 14 fährt aus der Ruheposition in die Entnahmeposition am gekippten Bogenstapel 5. Der Greifer 14 des Handhabungsgerätes 13 greift die frei gegebene Transportpalette 6.
- Figur 15:: Das Handhabungsgerät 13 rückt die Transportpalette 6 von der Stapeloberfläche ab und fährt sie aus dem Stapel bereich.
- Figur 16:: Das Handhabungsgerät 13 schwenkt die Transportpalette 6 bei Bedarf seitenrichtig und setzt sie am Palettenspeicher 15 ab. Dort können Lagerplätze für Paletten verschiedener Größe vorgesehen sein, die entsprechend beschickt werden.
Gleichzeitig wird der Bogenstapel 5 mit der Systempalette 7 geklemmt und der Tragarm 3 so geschwenkt, daß der Bogenstapel 5 horizontal liegt. In dieser Position kann er ausgerichtet, gerüttelt und belüftet werden.
Danach kann der Bogenstapel 5 erneut eingeklemmt, geschwenkt, in die Vertikale zurückgekippt und auf der Systempalette 7 aufsitzend von dem Stapelwender 1 freigegeben werden. Er steht dann zur automatischen Verarbeitung in einer bogenverarbeitende Maschine bereit.

Die zweite Version der Vorrichtung ist für Bereiche ohne Platzprobleme geeignet, da sie zwar mehr Raum beansprucht, gleichzeitig aber eine einfachere Technik für die Manipulation der Transportpaletten zur Verfügung stellt. Außerdem ist die Stapelhandhabung etwas einfacher und gegebenenfalls auch sicherer. Zum Beispiel kann sie für die Bearbeitung dünner Papier besser geeignet sein.
Als Alternative zur dargestellten Version ist es auch möglich das Handhabungsgerät 13 ortsfest anzuordnen. Dafür können dann die Greifer 14 gegenüber dem Stapelwender 1 derart ausfahrbar sein, daß sie die Transportpalette 6 vom Bogenstapel 5 im Stapelwender 1 entnehmen können.

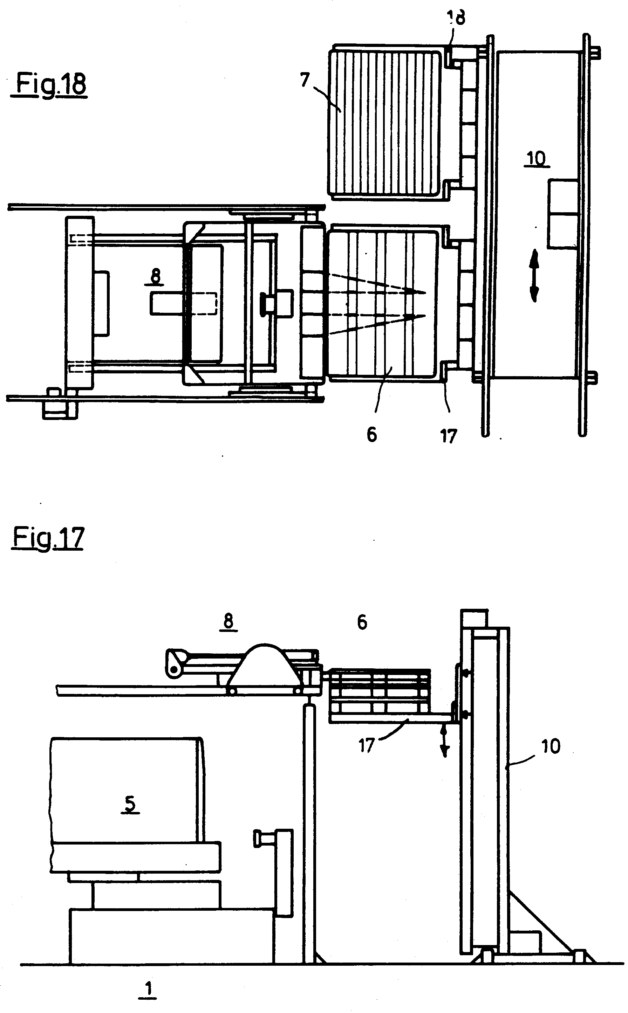

Generell soll die Systempalette 7 vom Handhabungsgerät 8, 13 eingesetzt werden. Das kann vor oder nach Entnahme der Transportpalette geschehen, je nach Verfahrenswahl. In diesem Fall ist es aber sinnvoll einen automatisierten Palettenspeicher vorzusehen. In Figur 17 und 18 ist eine solche Einrichtung dargestellt. Die Transportpaletten 6 und Systempaletten 7 werden auf jeweils eigenen Palettenaufnahmen 17, 18 abgelegt bzw. entnommen. Die Palettenaufnahmen 17, 18 sind in der Höhe verfahrbar und so auf die Arbeitshöhe des Handhabungsgerätes 8, 13 einstellbar.
Außerdem ist der ganze Palettenspeicher gegenüber dem Handhabungsgerät 8, 13 verfahrbar, sodaß die jeweils benötigte Palettenaufnahme 17, 18 mit dem Handhabungsgerät 8, 13 zusammenarbeiten kann.

Das Ausführungsbeispiel bezieht sich auf spezielle Details der Erfindung, sodaß z.B. als Manipulator auch andere Einrichtungen als der beschriebene Stapelwender eingesetzt werden können.

### Bezugszeichenliste:

- Stapelwender: 1
- Sockel: 2
- Tragarm: 3
- Anpressplatten: 4
- Bogenstapel: 5
- Transportpalette: 6
- Systempalette: 7
- Handhabungsgerät: 8
- Fahrschiene: 9
- Palettenspeicher: 10
- Fahrwerk: 11
- Greifer: 12
- Handhabungsgerät: 13
- Greifer: 14
- Palettenspeicher: 15
- Fahrwerk: 16
- Palettenaufnahme: 17
- Palettenaufnahme: 18

## Patentansprüche

1. Verfahren zum automatischen Austausch einer Transportpalette eines Bogenstapels, wobei der Bogenstapel gekippt wird,
**dadurch gekennzeichnet,**
daß der Bogenstapel (5) mittels eines Manipulators um mehr als 90° gekippt wird, derart, daß der Bogenstapel (5) wenigstens schräg liegt und die Transportpalette (6) an der nach oben weisenden Seite zu liegen kommt, daß die auf dem Bogenstapel (5) aufliegende Transportpalette (6) von einem Handhabungsgerät (8, 13) erfaßt wird, wobei die Transportpalette (6) von dem Manipulator freigegeben wird, und daß die Transportpalette (6) durch das Handhabungsgerät vom Bogenstapel (5) abgehoben und aus dem Stapelbereich gefahren, bei Bedarf seitenrichtig geschwenkt und an einem Palettensammelplatz abgelegt wird.

2. Verfahren nach Anspruch 1,
**dadurch gekennzeichnet,**
daß nach dem Ablegen der leeren Transportpalette (6) in einem Palettenspeicher (10) das Handhabungsgerät (8, 13) eine Systempalette (7) von einem Vorratsstapel entnimmt und sensorgesteuert auf den noch freien Bogenstapel (5) auflegt.

3. Verfahren nach Anspruch 1,
**dadurch gekennzeichnet,**
daß nach dem Ablegen der leeren Transportpalette (6) in einem Palettenspeicher (10) das Handhabungsgerät (8, 13) eine Systempalette (7) von einem Vorratsstapel entnimmt und sensorgesteuert an einer Halteeinrichtung des Manipulators lösbar anbringt.

4. Vorrichtung zur Durchführung des Verfahrens nach Anspruch 1, mit einem Manipulator zum Bewegen des Bogenstapels,
**dadurch gekennzeichnet,**
daß dem Manipulator ein Handhabungsgerät (8) zugeordnet ist, derart, daß sich die Arbeitsbereiche beider Einrichtungen überschneiden, daß das Handhabungsgerät (8) eine Klemmeinrichtung zum Halten von Paletten aufweist, daß die Klemmeinrichtung zwischen dem Arbeitsbereich des Manipulators und Speichereinrichtungen für Leerpaletten bewegbar ist, daß das Handhabungsgerät (8) längsverfahrbar auf Fahrschienen (9) oberhalb des Manipulators angeordnet ist, daß die Klemmeinrichtung als Greifer (12) ausgebildet ist, der am Handhabungsgerät (8) längsverschieblich angebracht ist, und daß der Greifer (12) am Handhabungsgerät (8) um eine Achse parallel zur Kippachse des Bogenstapels (5) schwenkbar ist.

5. Vorrichtung zur Durchführung des Verfahrens nach Anspruch 1, mit einem Manipulator zum Bewegen des Bogenstapels,
**dadurch gekennzeichnet,**
daß dem Manipulator ein Handhabungsgerät (13) zugeordnet ist, derart, daß sich die Arbeitsbereiche beider Einrichtungen überschneiden, daß das Handhabungsgerät (13) eine Klemmeinrichtung zum Halten von Paletten aufweist, daß die Klemmeinrichtung zwischen dem Arbeitsbereich des Manipulators und Speichereinrichtungen für Leerpaletten bewegbar ist, daß das Handhabungsgerät (13) ebenerdig und längsverfahrbar in Richtung zum Manipulator und vor dessen Arbeitsbereich angeordnet ist, daß die Klemmeinrichtung als Greifer (14) ausgebildet ist, der am Handhabungsgerät (13) höhenverschiebbar und drehbar angebracht ist, und daß das Handhabungsgerät (13) um eine vertikale Achse schwenkbar ist.

6. Vorrichtung nach Anspruch 5,
**dadurch gekennzeichnet,**
daß das Handhabungsgerät (13) aus einem ebenerdig und seitlich versetzt zum Manipulator vor dessen Arbeitsbereich fest angeordneten Gestell besteht, daß der Greifer (14) in den Arbeitsbereich des Manipulators ausfahrbar und um eine horizontale Achse schwenkbar ist, und wenigstens der Greifer (14) am Handhabungsgerät (13) um eine vertikale Achse schwenkbar ist.

7. Vorrichtung nach einem der Ansprüche 4 bis 6,
**dadurch gekennzeichnet,**
daß als Manipulator ein Stapelwender (1) verwendet wird, der aus einem wahlweise fahrbaren Sockel (2) besteht und an dem eine Haltevorrichtung (3, 4) für einen Bogenstapel angeordnet ist, die um eine horizontale Achse und um eine senkrecht auf der Haltevorrichtung (3, 4) stehende Achse schwenkbar ist.

8. Vorrichtung nach einem der Ansprüche 4 bis 6,
**dadurch gekennzeichnet**
daß alle Bewegungen der Handhabungsgeräte (8, 13) und Greifer (12, 14) motorisch angetrieben sind.

9. Vorrichtung nach einem der Ansprüche 4 bis 6,
**dadurch gekennzeichnet,**
daß die Greifer (12, 14) aus Auslegerarmen mit sensorisch gesteuerten Greiferorganen bestehen und daß die Auslegerarme motorisch verschiebbar sind.

10. Vorrichtung nach einem der vorhergehenden Ansprüche 4-9,
**dadurch gekennzeichnet,**
daß ein Palettenspeicher (10) vorgesehen ist, der eine heb- und senkbare Palettenaufnahmeeinrichtung aufweist.

11. Vorrichtung nach Anspruch 10,
**dadurch gekennzeichnet,**
daß der Palettenspeicher (10) zwei nebeneinanderliegende Abteile mit je einer heb- und senkbaren Palettenaufnahme (17, 18) für Transportpaletten (6) und Systempaletten (7) aufweist.

12. Vorrichtung nach Anspruch 11,
**dadurch gekennzeichnet,**
daß der Palettenspeicher (10) so gegenüber dem Handhabungsgerät 8, 13) verfahrbar angeordnet ist, daß die Palettenaufnahmen (17, 18) für Transportpaletten (6) und Systempaletten (7) wechselweise mit dem Handhabungsgerät (8, 13) zusammenwirken.

## Claims

1. Process for the automatic exchange of a transport pallet of a sheet pile wherein the sheet pile is tipped, characterised in that the sheet pile (5) is tipped by means of a manipulator through more than 90° in such a fashion that the sheet pile (5) at least lies obliquely and the transport pallet (6) comes to lie on the upwardly directed side, that the transport pallet (6) lying on the sheet pile (5) is grasped by a handling apparatus (8, 13), wherein the transport pallet (6) is freed from the manipulator and that the transport pallet (6) is lifted by the handling apparatus from the sheet pile (5) and moved out of the region of the pile, as necessary swivelled to its correct side, and deposited at a pallet collection area.

2. Process according to claim 1, characterised in that after the deposition of the empty transport pallet (6) in a pallet store (10), the handling apparatus (8, 13) removes a system pallet (7) from a storage pile and deposits it controlled by sensors on to the still-free sheet pile (5).

3. Process according to Claim 1, characterised in that after the deposition of the empty transport pallet (6) in a pallet store (10), the handling apparatus (8, 13) takes out a system pallet (7) from a storage pile and under sensor control applies it releasably to a holding device of the manipulator.

4. Device for carrying out the process according to Claim 1 with a manipulator for moving the sheet pile, characterised in that the manipulator has a handling apparatus (8) fitted thereto in such a fashion that the working regions of both devices intersect, that the handling apparatus (8) has a clamping unit for holding pallets, that the clamping unit is movable between the working region of the manipulator and storage units for empty pallets, that the handling apparatus (8) is arranged longitudinally movable on guide rails (9) above the manipulator, that the clamping device is constructed as a gripper (12) which is installed longitudinally movably on the handling apparatus (8) and that the gripper (12) is swivellable on the handling apparatus (8) about an axis parallel to the tipping axis of the sheet pile (5).

5. Device for carrying out the process according to Claim 1, with a manipulator for moving the sheet pile, characterised in that a handling apparatus (13) is fitted to the manipulator in such a fashion that the working regions of both units intersect, that the handling apparatus (13) has a clamping unit for holding pallets, that the clamping unit is movable between the working region of the manipulator and storage units for empty pallets, that the handling apparatus (13) is arranged at ground level and longitudinally movable in the direction towards the manipulator and arranged before its working region, that the clamping device is constructed as gripper (14) which is installed rotatably and shiftably with respect to its height on the handling apparatus (13), and that the handling apparatus (13) is swivellable about a vertical axis.

6. Device according to Claim 5, characterised in that the handling apparatus (13) consists of a ground level frame fixedly arranged and laterally offset relative to the manipulator before its working region, that the gripper (14) can be moved out into the working region of the manipulator and is swivellable about a horizontal axis and at least one of the grippers (14) on the handling apparatus (13) is swivellable about a vertical axis.

7. Device according to one of Claims 4 to 6, characterised in that a pile turner (1) is used as a manipulator which consists of an optionally movable base (2) and on which a holding device (3, 4) for a sheet pile is arranged which is swivellable about a horizontal axis and about an axis standing perpendicular on the holding device (3, 4).

8. Device according to one of Claims 4 to 6, characterized in that all movements of the handling apparatus (8, 13) and gripper (12, 14) are motor driven.

9. Device according to one of Claims 4 to 6, characterized in that the gripper (12, 14) consists of boom arms with sensor controlled gripper elements and that the boom arms are shiftable by motor.

10. Device according to one of the preceding Claims 4-9, characterized in that a pallet store (10) is provided which has a liftable and lowerable pallet receiving unit.

11. Device according to Claim 10, characterized in that the pallet store (10) has two adjacently lying sections each with a liftable and lowerable pallet receiver (17, 18) for the transport pallets (6) and system pallets (7).

12. Device according to Claim 11, characterised in that pallet store (10) is arranged movably with respect to the handling apparatus (8, 13) in such a fashion that the pallet receiver (17, 18) for transport pallets (6) and system pallets (7) alternately cooperate with the handling apparatus (8, 13).

## Revendications

1. Procédé destiné à l'échange automatique d'une palette de transport d'une pile de feuilles, la pile de feuilles étant basculée à cet effet,
caractérisé en ce que
la pile (5) de feuilles est basculée de plus de 90° au moyen d'un manipulateur de telle sorte que la pile (5) de feuilles soit au moins positionnée obliquement et que la palette de transport (6) soit située du côté orienté vers le haut, en ce que la palette de transport (6) située sur la pile (5) de feuilles est saisie par un engin de manutention (8, 13), la palette de transport (6) étant alors libérée par le manipulateur, et en ce que la palette de transport (6) est soulevée de la pile (5) de feuilles par l'engin de manutention et évacuée de la zone de la pile, qu'elle est en cas de besoin pivotée du bon côté et stockée sur une aire de collecte.

2. Procédé selon la revendication 1,
caractérisé en ce que,
après la dépose des palettes de transport (6) vides dans un stockage (10) de palettes, l'engin de manutention (8, 13) commandé par capteur prélève une palette de système (7) d'une pile de réserve et la place sur la pile (5) de feuilles encore dégagée.

3. Procédé selon la revendication 1,
caractérisé en ce que,
après la dépose des palettes de transport (6) vides dans un stockage (10) de palettes, l'engin de manutention (8, 13) commandé par capteur prélève une palette de système (7) d'une pile de réserve et la fixe de façon amovible sur un dispositif de retenue du manipulateur.

4. Dispositif destiné à la mise en oeuvre du procédé selon la revendication 1, comportant un manipulateur pour déplacer la pile de feuilles
caractérisé en ce que
un engin de manutention (8) est associé au manipulateur de telle sorte que les zones de travail des deux dispositifs se chevauchent, en ce que l'engin de manutention (8) comporte un dispositif de serrage destiné à retenir des palettes, en ce que le dispositif de serrage peut être déplacé entre la zone de travail du manipulateur et des dispositifs de stockage de palettes vides, en ce que l'engin de manutention (8) est disposé au-dessus du manipulateur de façon à pouvoir se déplacer sur des rails de roulement (9) dans le sens longitudinal, en ce que le dispositif de serrage est réalisé sous la forme d'un preneur (12) qui est fixé sur l'engin de manutention (8) de façon à pouvoir se déplacer dans le sens longitudinal, et en ce que le preneur (12) peut pivoter sur l'engin de manutention (8) autour d'un axe qui est parallèle à l'axe de basculement de la pile (5) de feuilles.

5. Dispositif destiné à la mise en oeuvre du procédé selon la revendication 1, comportant un manipulateur pour déplacer la pile de feuilles
caractérisé en ce que
un engin de manutention (13) est associé au manipulateur de telle sorte que les zones de travail des deux dispositifs se chevauchent, en ce que l'engin de manutention (13) comporte un dispositif de serrage destiné à retenir des palettes, en ce que le dispositif de serrage peut être déplacé entre la zone de travail du manipulateur et des dispositifs de stockage de palettes vides, en ce que l'engin de manutention (13) est disposé à même le sol en amont de la zone de travail du manipulateur et peut se déplacer dans le sens longitudinal en direction de ce dernier, en ce que le dispositif de serrage est réalisé sous la forme d'un preneur (14) qui est fixé sur l'engin de manutention (13) de façon à pouvoir être déplacé en hauteur et à pouvoir tourner, et en ce que l'engin de manutention (13) peut pivoter autour d'un axe vertical.

6. Dispositif selon la revendication 5,
caractérisé en ce que
l'engin de manutention (13) est constitué d'un cadre disposé en fixe à même le sol en amont de la zone de travail du manipulateur, et décalé latéralement par rapport à ce dernier, en ce que le preneur (14) peut pénétrer dans la zone de travail du manipulateur et pivoter autour d'un axe horizontal, et en ce qu'au moins le preneur (14) peut pivoter autour d'un axe vertical sur l'engin de manutention (13).

7. Dispositif selon l'une quelconque des revendications 4 à 6,
caractérisé en ce que
un dispositif de retournement (1) de piles est utilisé comme manipulateur, lequel est constitué d'un socle (2) pouvant être déplacé à la demande, et sur lequel est prévu un dispositif de retenue (3, 4) pour une pile de feuilles qui peut pivoter autour d'un axe horizontal, et autour d'un axe situé perpendiculairement sur le dispositif de retenue (3, 4).

8. Dispositif selon l'une quelconque des revendications 4 à 6,
caractérisé en ce que
tous les déplacements des engins de manutention (8, 13) et des preneurs (12, 14) sont entraînés par moteur.

9. Dispositif selon l'une quelconque des revendications 4 à 6,
caractérisé en ce que
les preneurs (12, 14) sont constitués de bras de console comportant des organes de préhension commandés par capteur, et en ce que les bras de console peuvent être déplacés par moteur.

10. Dispositif selon l'une quelconque des revendications 4 à 9,
caractérisé en ce que
il est prévu un stockage (10) de palettes comportant un dispositif de réception de palettes pouvant être soulevé et abaissé.

11. Dispositif selon la revendication 10,
caractérisé en ce que
le stockage (10) de palettes comporte deux compartiments situés côte-à-côte, chacun d'entre eux comportant un dispositif de réception (17, 18) pouvant être soulevé et abaissé, destiné à des palettes de transport (6) et à des palettes de système (7).

12. Dispositif selon la revendication 11,
caractérisé en ce que
le stockage (10) de palettes est disposé de façon à pouvoir être déplacé par rapport à l'engin de manutention (8, 13) de telle sorte que les dispositifs de réception (17, 18) pour palettes de transport (6) et palettes de système (7) agissent en alternance conjointement avec l'engin de manutention (8, 13).
